# EUROPEAN PATENT SPECIFICATION

(11) **EP 0 604 014 B1**
(45) Date of publication and mention of the grant of the patent: **21.05.1997**
(21) Application number: 93309136.5
(22) Date of filing: 16.11.1993
(51) Int. Cl.: B23K 35/38

(54) **Shielding gases for electric arc welding**
Schutzgas zum Lichtbogenschweissen
Gaz protecteur pour soudage à l'arc

(30) Priority: 23.11.1992 GB 9224514
(43) Date of publication of application: 29.06.1994
(73) Proprietor: The BOC Group plc, Windlesham Surrey GU20 6HJ (GB)
(72) Inventor: Simpson, Peter James, Moseley, Birmingham B13 9XY (GB); Stares, Ian John, East Molesey, Surrey KT8 9DG (GB)
(74) Representative: Gough, Peter

(56) References cited:
- AU-B- 519 768
- GB-A- 1 121 594
- US-A- 2 497 631
- US-A- 4 889 274

## Description

The present invention relates to the use of neon in a shielding gas mixture for electric arc welding processes.

For the avoidance of doubt throughout this specification the term "shielding gas" embraces both a single constituent shielding gas and shielding gas mixtures.

In tungsten inert gas (TIG) welding, a shielding gas is employed to protect both the weld and the substantially non-consumable tungsten electrode from oxidation. Argon, argon/helium and argon/helium/hydrogen gas mixtures are used as shielding gases for TIG welding processes.

In metal inert gas (MIG) welding also shielding gas is used to protect the weld from oxidation.

A welding arc produces strong ultra-violet (UV) emissions which encourage the formation of ozone. It is known that ozone acts as an irritant when inhaled which can damage the respiratory organs.

GB-A-1121,594 describes a gas mixture suitable for use as a shielding gas for electric arc welding using consumable electrodes formed from steel having a high alloy content in which the gas mixture can optionally include up to 27% by volume of neon. The mechanical characteristics of welded assemblies obtained using this shielding gas is said to be good. However, there is no mention of neon being used as an ozone suppressor.

AU-A-519768 describes a plasma cutting gas mixture including 15 to 50% by volume neon.

It is the object of the present invention to provide a shielding gas for use in electric arc welding which significantly reduces the UV emissions when compared to the emissions produced when using known shielding gas mixtures.

According to the present invention, neon is used in a shielding gas mixture for electric arc welding as an ozone suppressor in which the neon comprises at least 40% by volume of the shielding gas mixture, the remainder comprising at least one other inert gas.

Preferably, the at least one other inert gas is argon.

Alternatively, the at least one other inert gas is helium.

The at least one other inert gas may be a mixture of argon and helium.

In a preferred embodiment the shielding gas mixture can include from 0.5 to 10% by volume hydrogen.

Embodiments of the present invention will now be described by way of example, reference being made to the Figures of the accompanying drawings in which:-
Figure 1 is a graph illustrating ultra violet emissions from a welding arc in the spectral region (180 to 240nm) using as a shielding gas argon, helium, neon and argon/hydrogen, argon/neon, helium/neon, helium/argon/neon mixtures.
Figure 2 is a diagram illustrating the ozone concentration in parts per billion of various shielding gases during a TIG welding process.

Experiments were carried out to measure the UV emissions and ozone generation for a TIG welding arc with different inert and active shielding gases.

The UV measurements were conduced in a vessel having an internal volume of 0.095 cubic meters. The vessel was evacuated and filled with a particular shielding gas. An arc was struck on to a water cooled copper anode. The water cooled copper anode allowed the emissions from the arc to be examined without the influence from a weldpool.

The UV measurements were made with a detector designed to measure emissions in the region of 180nm to 240nm.

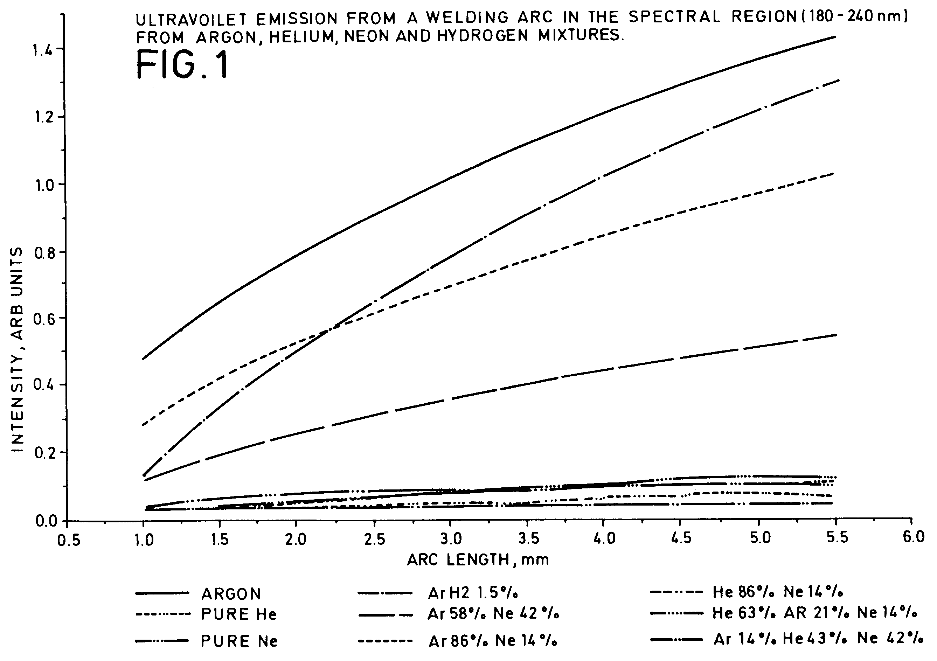

Using the known shielding gas, substantially pure argon, as a reference it was found that the argon arc had very strong UV emissions and appeared bright blue in colour. The argon was then replaced by other shielding gases as indicated in Figure 1 including neon, argon/neon, helium/neon and argon/helium/neon mixtures.

The addition of 14% neon to an argon shielding gas reduced UV emission by 25% relative to pure argon. However, when the level of neon was increased above 40% to 42% the UV emission was reduced considerably to 50% when compared to pure argon. A range of helium/neon and argon/helium/neon mixtures were tested and when the percentage by volume of neon in the shielding gas mixture was 40% or more the UV emission was reduced by 50% or more when compared with pure argon.

In order to monitor the ozone produced by the UV emissions different measurement techniques were used including a UV adsorption ozone monitor manufactured by Dasibi and a chemiluminescence monitor manufactured by CIS. These instruments were placed at 300mm and 30° from the arc being generated. Both monitors gave consistent and similar results.

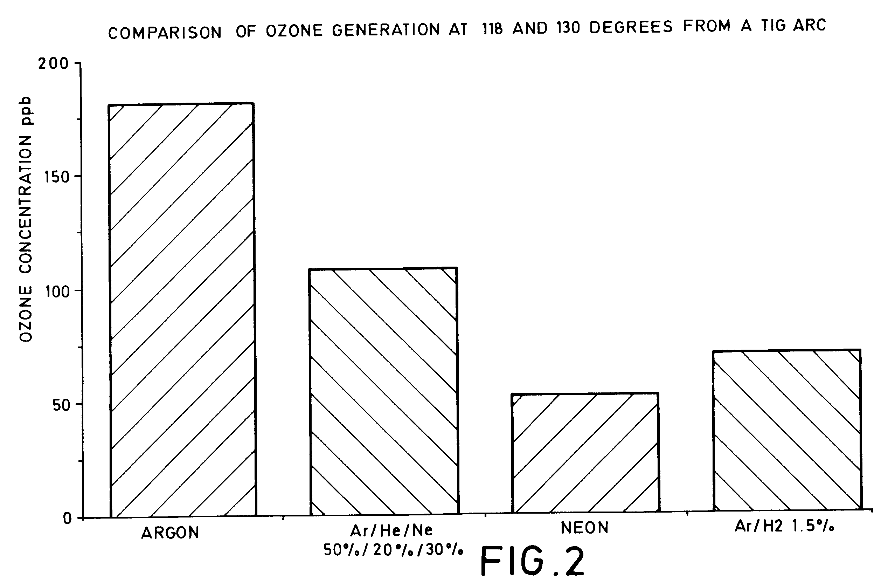

Referring to Figure 2 this illustrates the peak ozone generation and it will be observed that pure neon shows a reduction of 75% compared to pure argon. A mixture of argon 50%/helium 20%/neon 30% was tested and this gave a reduction in peak ozone generation of 45% compared to pure argon.

Shielding gases containing more than 40% helium with the balance argon generate less ozone than pure argon. However, as the helium content is increased arc starting becomes more difficult and shielding efficiency decreases due to the low mass of helium compared to air. This must be compensated for by increasing the shielding gas flow rate. The addition of neon to a helium shielding gas will allow better shielding efficiency, easier arc starting and lower ozone generation.

The addition of small quantities of hydrogen, that is from 0.5 to 10% by volume will further reduce the generation of ozone beyond that expected from inert shielding gas mixtures when compared to pure argon.

Although reference has been made in particular to TIG welding, a shielding gas including at least 40% neon can be used with equal beneficial effects with regard to low UV emissions and hence low ozone production in a consumable electrode welding process.

## Claims

1. The use of neon in a shielding gas mixture for electric arc welding as an ozone suppressor in which the neon comprises at least 40% by volume, the remainder comprising at least one other inert gas.

2. The use of neon in a shielding gas mixture as claimed in Claim 1, in which the at least one other inert gas is argon.

3. The use of neon in a shielding gas mixture as claimed in Claim 1, in which the at least one other inert gas is helium.

4. The use of neon in a shielding gas mixture as claimed in Claim 1, in which the at least one other inert gas is a mixture of argon and helium.

5. The use of neon in a shielding gas mixture as claimed in any one of Claims 1 to 4, including from 0.5 to 10% by volume of hydrogen.

6. A non-consumable electrode welding process including the use of a shielding gas as claimed in any one of claims 1 to 5.

7. A consumable electrode welding process including the use of a shielding gas as claimed in any one of Claims 1 to 5.

## Patentansprüche

1. Verwendung von Neon in einem Schutzgasgemisch für das elektrische Lichtbogenschweißen als Ozonunterdrückungsmittel, wobei das Neon mindestens 40 Volumen-Prozent ausmacht und der Rest aus mindestens einem weiteren Inertgas besteht.

2. Verwendung von Neon in einem Schutzgasgemisch nach Anspruch 1, wobei das mindestens eine weitere Inertgas Argon ist.

3. Verwendung von Neon in einem Schutzgasgemisch nach Anspruch 1, wobei das mindestens eine weitere Inertgas Helium ist.

4. Verwendung von Neon in einem Schutzgasgemisch nach Anspruch 1, wobei das mindestens eine weitere Inertgas ein Gemisch aus Argon und Helium ist.

5. Verwendung von Neon in einem Schutzgasgemisch nach einem der Ansprüche 1 bis 4, das 0,5 bis 10 Volumen-Prozent Wasserstoff enthält.

6. Schweißverfahren mit sich nicht verbrauchender Elektrode unter Verwendung eines Schutzgases nach einem der Ansprüche 1 bis 5.

7. Schweißverfahren mit sich verbrauchender Elektrode unter Verwendung eines Schutzgases nach einem der Ansprüche 1 bis 5.

## Revendications

1. Utilisation du néon dans un mélange de gaz protecteur pour soudage à l'arc électrique comme inhibiteur d'ozone, dans lequel le néon constitue au moins 40 % du volume du mélange de gaz protecteur, le reste étant constitué d'au moins un autre gaz inerte.

2. Utilisation du néon dans un mélange de gaz protecteur selon la Revendication 1, dans lequel l'autre au moins gaz inerte est l'argon.

3. Utilisation du néon dans un mélange de gaz protecteur selon la Revendication 1, dans lequel l'autre au moins gaz inerte est l'hélium.

4. Utilisation du néon dans un mélange de gaz protecteur selon la Revendication 1, dans lequel l'autre au moins gaz inerte peut être un mélange d'argon et d'hélium.

5. Utilisation du néon dans un mélange de gaz protecteur selon l'une quelconque des Revendications 1 à 4, comprenant de 0,5 à 10 % en volume d'hydrogène.

6. Procédé de soudage à électrode réfractaire comprenant l'utilisation d'un gaz protecteur selon l'une quelconque des Revendications 1 à 5.

7. Procédé de soudage à électrode fusible comprenant l'utilisation d'un gaz protecteur selon l'une quelconque des Revendications 1 à 5.
